# EUROPEAN PATENT APPLICATION

(11) **EP 1 324 225 A2**
(43) Date of publication of application: **02.07.2003**
(21) Application number: 02028653.0
(22) Date of filing: 20.12.2002
(51) Int. Cl.: G06F 17/30

(54) **Alternate interpretation of markup language documents**

(30) Priority: 27.12.2001 US 34394
(71) Applicant: SAMSUNG ELECTRONICS CO., LTD., Suwon-City, Kyungki-do (KR)
(72) Inventor: Moles, Bryan Jeffery, Dallas, Dallas Country, Texas 75209 (US)
(74) Representative: Grünecker, Kinkeldey, Stockmair & Schwanhäusser Anwaltssozietät

(57) **Abstract**

A portion of markup language source selected for display is scanned for tags associated with graphical elements. Each detected graphical element with the selected markup language source portion is replaced with one of a set of placeholders each having a label corresponding to one button, where actuation of a button initiates display of a graphical element replaced by the corresponding placeholder. The placeholders are reused to replace other graphical elements within other portions of the markup language source when such other portions are selected for display.

## Description

### TECHNICAL FIELD OF THE INVENTION

The present invention is directed, in general, to data display on wireless communications devices and, more specifically, to transformation of markup language documents for display on wireless communications devices.

### BACKGROUND OF THE INVENTION

Wireless communications devices such as mobile telephones and personal digital assistants are increasingly being employed to access Internet World Wide Web sites and enterprise intranet servers employing the HyperText Transfer Protocol (HTTP). The data retrieved from such sites or servers to the wireless communications device is typically a markup language document, such as a HyperText Markup Language (HTML) or Extensible Markup Language (XML) document.

Markup language documents from Internet-type servers are generally created and formatted for display on systems having relatively large display areas, such as personal computers or workstations. Wireless communications devices, on the other hand, usually have constrained (small) display areas incapable of displaying markup language documents in the form in which intended to be displayed. Accordingly, wireless devices generally cannot display markup language documents by interpreting the markup language source code in a "standard" way--that is, the way in which the document designer intended the document to be displayed. Graphic images, tables and user input forms, in particular, are problematic to display on a wireless communications device. Additionally, the document display is slightly altered depending on the configuration of the browser employed by the devices. However, such configurations do not take into account the devices inherent resource limitations, especially with regard to impact on rendering complexity and screen layout.

One solution involves separate documents for wireless communications devices containing similar content to markup language documents intended for display on systems having a larger display area. However, creation and maintenance of duplicate documents consumes time, memory and other resources. Moreover, few sites other than those targeting wireless communications devices bother to create such separate documents.

There is, therefore, a need in the art for adapting markup language documents for display on wireless communications devices or other devices having a constrained display area.

### SUMMARY OF THE INVENTION

To address the above-discussed deficiencies of the prior art, it is a primary object of the present invention to provide, for use in a browser, a markup language conversion controller scanning a portion of markup language source selected for display for tags associated with graphical elements. Each detected graphical element with the selected markup language source portion is replaced with one of a set of placeholders each having a label corresponding to one button, where actuation of a button initiates display of a graphical element replaced by the corresponding placeholder. The placeholders are reused to replace other graphical elements within other portions of the markup language source when such other portions are selected for display.

The foregoing has outlined rather broadly the features and technical advantages of the present invention so that those skilled in the art may better understand the detailed description of the invention that follows. Additional features and advantages of the invention will be described hereinafter that form the subject of the claims of the invention. Those skilled in the art will appreciate that they may readily use the conception and the specific embodiment disclosed as a basis for modifying or designing other structures for carrying out the same purposes of the present invention. Those skilled in the art will also realize that such equivalent constructions do not depart from the spirit and scope of the invention in its broadest form.

Before undertaking the DETAILED DESCRIPTION OF THE INVENTION below, it may be advantageous to set forth definitions of certain words or phrases used throughout this patent document: the terms "include" and "comprise," as well as derivatives thereof, mean inclusion without limitation; the term "or" is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, bo bound to or with, have, have a property of, or the like; and the term "controller" means any device, system or part thereof that controls at least one operation, whether such a device is implemented in hardware, firmware, software or some combination of at least two of the same. It should be noted that the functionality associated with any particular controller may be centralized or distributed, whether locally or remotely. Definitions for certain words and phrases are provided throughout this patent document, and those of ordinary skill in the art will understand that such definitions apply in many, if not most, instances to prior as well as future uses of such defined words and phrases.

### BRIEF DESCRIPTION OF THE DRAWINGS

For a more complete understanding of the present invention, and the advantages thereof, reference is now made to the following descriptions taken in conjunction with the accompanying drawings, wherein like numbers designate like objects, and in which;

FIGURE 1 depicts a block diagram of a wireless communications device adapting markup languages for display thereon according to one embodiment of the present invention;

FIGURES 2A and 2B through 2E are comparative illustrations of a markup language document display as intended and as adapted by conversion controller according to one embodiment of the present invention; and

FIGURE 3 is a high level flowchart for a process of converting a markup language document for display on a constrained display area according to one embodiment of the present invention.

### DETAILED DESCRIPTION OF THE INVENTION

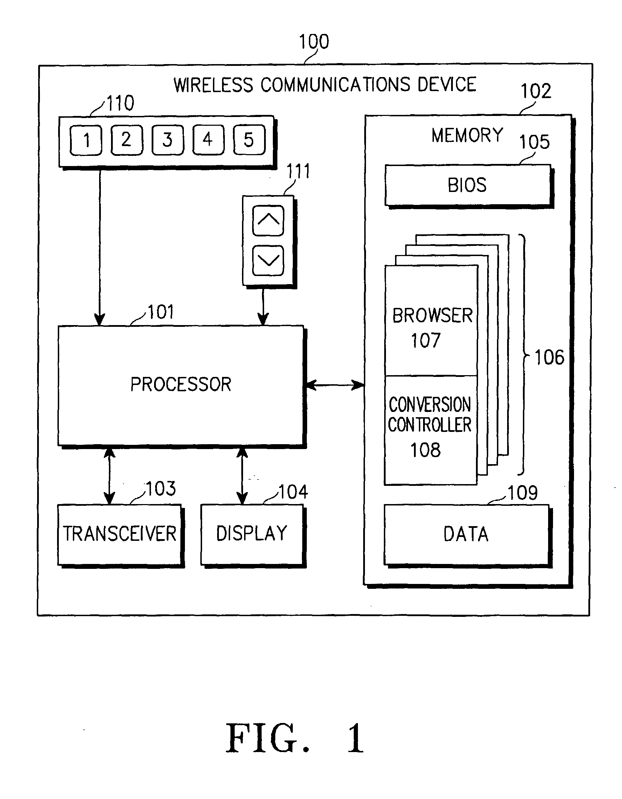

FIGURES 1 through 3, discussed below, and the various embodiments used to describe the principles of the present invention in this patent document are by way of illustration only and should not be construed in any way to limit the scope of the invention. Those skilled in the art will understand that the principles of the present invention may be implemented in any suitably arranged device.

FIGURE 1 depicts a block diagram of a wireless communications device adapting markup languages for display thereon according to one embodiment of the present invention. Wireless communications device 100, which may be either a mobile telephone or a wireless personal digital assistant (PDA) in the exemplary embodiment, includes a processor or controller 101 communicably coupled to a memory 102, a wireless transceiver 103 and a display 104. In addition to a basic input/output system (BIOS) 105, memory 102 contains, within application level programs 106, a browser 107 including, either integrated therein or associated therewith, a markup language conversion controller 108. Memory 102 also includes a data area 109 within which retrieved, and optionally translated, markup language documents are stored. Wireless communications device also includes a plurality of numbered or lettered user input buttons 110 and optionally scrolling control buttons 111.

In operation, wireless communications device 100 retrieves markup language documents from external or peripheral sources (not shown) such as servers or nonvolatile storage utilizing browser 107 in accordance with the known art. Either during retrieval and (temporary) storage of the markup language documents to data storage 109 or during rendering of retrieved markup language documents for display, conversion controller 108 adapts the markup language document for display on the wireless communications device 100 in the manner described in further detail below.

Those skilled in the art will recognize that the complete construction and operation of a wireless communications device is not depicted or described herein. Instead, for simplicity and clarity, only so much of the construction and operation of a wireless communications device as is unique to the present invention or necessary for an understanding of the present invention is shown and described. The remainder of the construction and operation of the wireless communications device may follow conventional practices. Moreover, although a wireless communications device is employed in the exemplary embodiment, those skilled in the art will recognize that the functionality described herein may be readily employed within other types of devices having constrained displays such as, for example, a digital audio (i.e., Motion Pictures Expert Group layer 3 or "MP3") player and docking cradle,

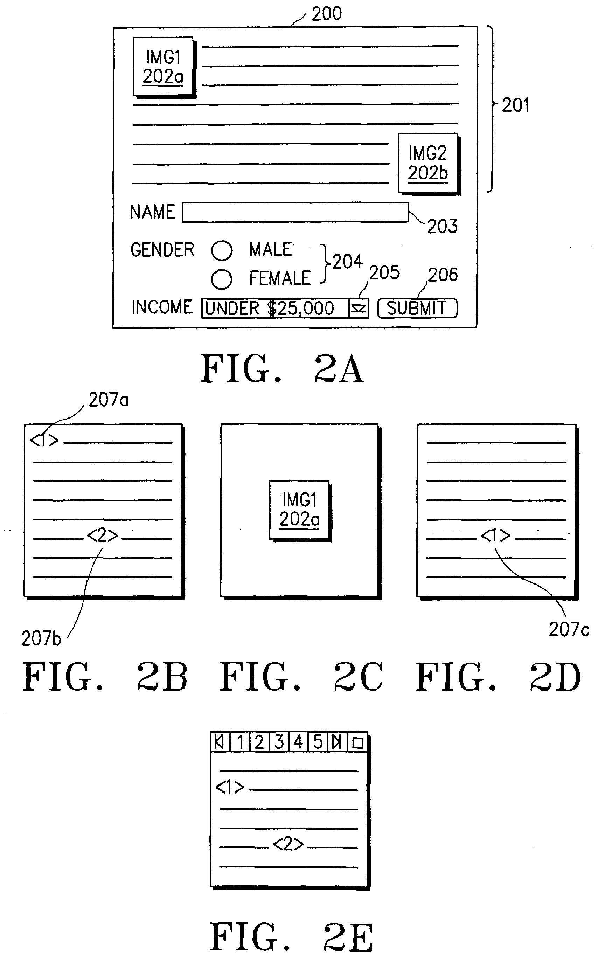

FIGURES 2A and 2B through 2E, which are intended to be taken in conjunction with FIGURE 1, are comparative illustrations of a markup language document display as intended and as adapted by conversion controller according to one embodiment of the present invention. FIGURE 2A is a mockup display of a markup language document as the document is intended to be displayed by the designer. The markup language document, interpreted and displayed in the standard manner, includes a text portion 201 with embedded graphic images 202a-202b, a form text input 203, radio buttons 204, a drop down box 205, and a user control 206 for submitting a query.

The present invention provides an alternate means of interpreting documents written in one of the various markup languages such that the document is better suited for display on the available physical display. In converting markup language documents for display on wireless communications device 100, conversion controller 108 searches the markup language source code for predefined tags and collapses the document by replacing content associated with the predefined tags with a placeholder having a number, letter, icon or other symbol corresponding to the number, letter, icon or other symbol on a user input button 110.

FIGURE 2B illustrates a first portion of the same markup language document displayed in FIGURE 2A after conversion for display on wireless communications device 100. As much of the text portion 201 of the document as can be fit within the display area is rendered on the display, but the graphic images 202a-202b (identified by conversion controller 108 from the image tags within the markup language source code) are replaced by placeholders 207a-207b displaying an identifier (number, letter, icon or other symbol) corresponding to the identifier on one of the user input buttons 110.

When the user presses the input key corresponding to a placeholder 207a, the text display is temporarily replaced by the graphic 202a associated with the image tag corresponding to placeholder 207a as shown in FIGURE 2C. Actuation of one or more other user input keys (such as scrolling keys 111) while the graphic image is displayed causes the display to return to the document text being viewed immediately prior to the placeholder key being actuated (i.e., the display in FIGURE B).

As the user scrolls through the content of a markup language document, the placeholders are reused. Thus, when the user scrolls down from the display in FIGURE 2B such that placeholder 207a moves outside of the viewable area, the placeholders are all reassigned and the placeholder 207c previously associated with image 202a becomes associated with image 202b as shown in FIGURE 2D.

Placeholders are employed for various types of graphics within converted markup language documents, including static bitmaps or compressed images and user controls such as "clickable" buttons 206, radio buttons 204, input form fields 203, and drop down list boxes 205, as well as tables, hyperlinks and animations, Each of these elements may be identified by the respective tags within the markup language document. Different actions may be employed for different categories of elements when the placeholder is actuated. For instance, no pop-up window is needed for clickable buttons, but pop-up windows are useful for displaying radio buttons for selection by the user.

It should be noted that the buttons corresponding to the placeholders need not be physical switches on the device. With touch screen devices, for example, the browser may instead generate software user interface buttons having a position, size and appearance best accommodating the size and capabilities of the device on which the document is displayed, such as the buttons appearing along one side of the display or within a scrollable "button box" as shown in FIGURE 2E. However, a typical document would require not more placeholders than the available keys on a mobile telephone.

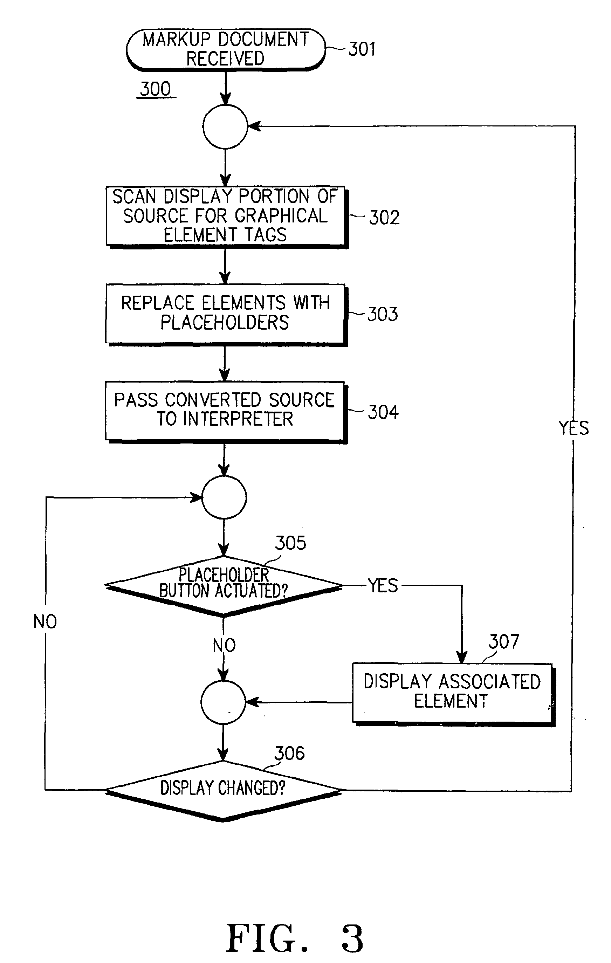

FIGURE 3 is a high level flowchart for a process of converting a markup language document for display on a constrained display area according to one embodiment of the present invention. The process 300 begins with a markup language document being received from a remote source or retrieved from storage (step 301). The markup language document is first passed to the conversion controller, which scans a portion of the markup language source code sufficient to fill the display for tags relating to predefined elements including inline graphics, tables, and user controls (step 302), and replaces such elements with hyperlink constructs that, when rendered on the display, present placeholders each with a preselected label to the viewer (step 303). If necessary, the conversion controller may generate additional display elements such buttons to accommodate the same document functionality.

The modified markup language source code for the portion of the document to be displayed is then sent to a standard markup language interpreter for parsing and rendering (step 304) and the associated portion of the markup language document is displayed.

The process then monitors for actuation of a placeholder button by the user (step 305) or scrolling or other display change (such as actuating a "back" control) by the user (step 306). If the user actuates a placeholder button, the corresponding element replaced by the placeholder is displayed (step 307). If the user scrolls the display or otherwise initiates a change in the display content, the appropriate portion of the markup language source code, which may be sequential with or overlapping the portion previously displayed, is scanned for the predefined elements requiring replacement by placeholders (step 302). The process continues until interrupted by closing the browser or selection of a different markup language document.

The present invention collapses viewable markup language documents by squeezing out white space and replacing document features with placeholders corresponding to keys, ignoring much of the formatting or layout information in existing markup language documents. Space on the small display of a handheld wireless device is saved by allowing a user to pop-up graphics on demand through buttons corresponding to where graphics are originally inline with the text of the markup language document. No special requirements are placed on existing markup languages, and no Web page source code changes are required as with many wireless technologies, nor are Web content processing gateways required as with the Wireless Application Protocol (MAP). All device-specific processing occurs on the device itself, which knows its own inherent capabilities. The complexity required to render graphics in arbitrary positions relative to text is removed, and easy navigation of typical web pages on a small display area using only a limited set of keys is enabled.

While described in the exemplary embodiment in connection to a wireless communications device, the technique of the present invention may be employed in connection with any browser such as personal computer web browsers. Additionally, while the exemplary embodiment describes dynamic replacement of graphic elements within display area sized portions of the underlying document as the user scrolls or navigates the document, replacement of graphical elements within markup language documents may be static, with the entire original document processed in advance of being sent to a standard markup language interpreter for parsing and display.

It is important to note that while the present invention has been described in the context of a fully functional device or system, those skilled in the art will appreciate that the mechanism of the present invention is capable of being implemented and distributed in the form of a computer usable medium of instructions in a variety of forms, and that the present invention applies equally regardless of the particular type of signal bearing medium is used to carry out the distribution. Examples of suitable computer usable mediums include: nonvolatile, hard-coded or programmable type mediums such as read only memories (ROMs) or erasable, electrically programmable read only memories (EEPROMs), recordable type mediums such as floppy disks, hard disk drives, and read/write (R/W) compact disc read only memories (CD-ROMs) or digital versatile discs (DVDs), and transmission type mediums such as digital and analog communications links.

Although the present invention has been described in detail, those skilled in the art will understand that various changes, substitutions, variations, enhancements, nuances, gradations, lesser forms, alterations, revisions, improvements and knock-offs of the invention disclosed herein may be made without departing from the spirit and scope of the invention in its broadest form.

## Claims

1. For use in a browser, a converter for adapting markup language documents for display in small areas comprising:
a conversion controller scanning a portion of markup language source selected for display for tags associated with graphical elements and replacing each detected graphical element within the selected markup language source portion with one of a plurality of placeholders having labels corresponding to a set of buttons,
wherein the plurality of placeholders are reused to replace detected graphical elements within other portions of the markup language source when such other portions are selected for display.

2. The converter according to claim 1, wherein each button is a physical switch or display element functioning as a user control for initiating display of a graphical element replaced by a corresponding placeholder.

3. The converter according to claim 1, wherein the graphical elements replaced by one of the placeholders includes images, user controls, hyperlinks, tables, and animations.

4. The converter according to claim 1, wherein the conversion controller, responsive to selection of the markup language source portion for display, replaces a tag associated with each detected graphical element with a link to one of the placeholders.

5. The converter according to claim 4, wherein the conversion controller, responsive to selection of a different portion of the markup language source for display including a different set of graphical elements than the previously selected markup language portion, replaces a tag associated with each detected graphical element within the different markup language source portion with a link to one of the placeholders, thereby reusing placeholders for the different set of graphical elements.

6. The converter according to claim 4, wherein the conversion controller passes altered markup language source containing at least one link to one of the placeholders in place of a graphical element within the selected markup language source portion to a markup language interpreter for rendering and display.

7. The converter according to claim 6, wherein actuation of a button corresponding to a placeholder within a displayed portion of the altered markup language source initiates display of the graphical element replaced by the corresponding placeholder.

8. A communications device comprising:
a display;
an input for receiving a markup language document to be displayed on the display; and
a conversion controller scanning a selected display portion of source for the markup language document for tags associated with graphical elements and replacing each detected graphical element within the selected markup language source portion with one of a plurality of placeholders having labels corresponding to a set of buttons,
wherein the plurality of placeholders are reused to replace detected graphical elements within other portions of the markup language source when such other portions are selected for display.

9. The communications device according to claim 8, wherein each button is a physical switch or display element functioning as a user control for initiating display of a graphical element replaced by a corresponding placeholder.

10. The communications device according to claim 8, wherein the graphical elements replaced by one of the placeholders includes images, user controls, hyperlinks, tables, and animations.

11. The communications device according to claim 8, wherein the conversion controller, responsive to selection of the markup language source portion for display, replaces a tag associated with each detected graphical element with a link to one of the placeholders.

12. The communications device according to claim 11, wherein the conversion controller, responsive to selection of a different portion of the markup language source for display including a different set of graphical elements than the previously selected markup language portion, replaces a tag associated with each detected graphical element within the different markup language source portion with a link to one of the placeholders, thereby reusing placeholders for the different set of graphical elements.

13. The communications device according to claim 11, wherein the conversion controller passes altered markup language source containing at least one link to one of the placeholders in place of a graphical element within the selected markup language source portion to a markup language interpreter for rendering and display.

14. The communications device according to claim 13, wherein actuation of a button corresponding to a placeholder within a displayed portion of the altered markup language source initiates display of the graphical element replaced by the corresponding placeholder.

15. A method of adapting markup language documents for display in small areas comprising:
scanning a portion of markup language source selected for display for tags associated with graphical elements;
replacing each detected graphical element within the selected markup language source portion with one of a plurality of placeholders having labels corresponding to a set of buttons; and
reusing the plurality of placeholders to replace detected graphical elements within other portions of the markup language source when such other portions are selected for display.

16. The method according to claim 15, wherein each button is a physical switch or display element functioning as a user control for initiating display of a graphical element replaced by a corresponding placeholder.

17. The method according to claim 15, wherein the graphical elements replaced by one of the placeholders includes images, user controls, hyperlinks, tables, and animations.

18. The method according to claim 15, wherein the step of replacing each detected graphical element within the selected markup language source portion with one of a plurality of placeholders having labels corresponding to a set of buttoned further comprises:
responsive to selection of the markup language source portion for display, replaces a tag associated with each detected graphical element with a link to one of the placeholders.

19. The method according to claim 18, wherein the step of reusing the plurality of placeholders to replace detected graphical elements within other portions of the markup language source when such other portions are selected for display further comprises:
responsive to selection of a different portion of the markup language source for display including a different set of graphical elements than the previously selected markup language portion, replaces a tag associated with each detected graphical element within the different markup language source portion with a link to one of the placeholders, thereby reusing placeholders for the different set of graphical elements.

20. The method according to claim 18, further comprising:
passing altered markup language source containing at least one link to one of the placeholders in place of a graphical element within the selected markup language source portion to a markup language interpreter for rendering and display.

21. The converter according to claim 20, further comprising:
responsive to actuation of a button corresponding to a placeholder within a displayed portion of the altered markup language source, initiating display of the graphical element replaced by the corresponding placeholder.
